**Europäisches Patentamt**

**European Patent Office**

**Office européen des brevets**

(19)

(11) Veröffentlichungsnummer : **0 041 620**
**B1**

(12) EUROPÄISCHE PATENTSCHRIFT

(45) Veröffentlichungstag der Patentschrift :
24.08.83

(21) Anmeldenummer : 81103574.0

(22) Anmeldetag : 11.05.81

(51) Int. Cl.³ : **A 23 L 1/237**

(54) Streng natriumarmes Diätsalz und dessen Herstellung.

(30) Priorität : 06.06.80 DE 3021298

(43) Veröffentlichungstag der Anmeldung :
16.12.81 Patentblatt 81/50

(45) Bekanntmachung des Hinweises auf die Patenterteilung : 24.08.83 Patentblatt 83/34

(84) Benannte Vertragsstaaten :
AT BE CH DE FR GB IT LI LU NL SE

(56) Entgegenhaltungen :
DE A 2 527 003
DE B 1 051 103
DE B 2 657 913
US A 3 505 082
US A 4 107 346

(73) Patentinhaber : BASF Aktiengesellschaft
Carl-Bosch-Strasse 38
D-6700 Ludwigshafen (DE)

(72) Erfinder : Pich, Claus Hinrich, Dr.
An der Duene 3
D-2082 Moorrege (DE)
Erfinder : Moest, Thomas, Dr.
An der Duene 9
D-2082 Moorrege (DE)

EP 0 041 620 B1

Jouve, 18, rue St-Denis, 75001 Paris, France

## Streng natriumarmes Diätsalz und dessen Herstellung

Es ist eine bekannte Tatsache, daß kochsalzlose Nahrung einen inakzeptabel faden Geschmack aufweist. Natriumarme Diätsalze sind jedoch notwendig, da viele Personen aus medizinischen Gründen die Natriumionen-Zufuhr stark einschränken müssen. Davon ist insbesondere betroffen die große Zahl der Personen mit zu hohem Blutdruck. Allein in der Bundesrepublik Deutschland sind 3 Millionen Hypertoniker bekannt, und von 3 bis 6 Millionen Personen kann angenommen werden, daß sie, ohne es zu wissen, einen zu hohen Blutdruck haben und damit dem Risiko einer Gesundheitsgefährdung in besonderem Maße ausgesetzt sind. In diesem Zusammenhang sei erwähnt, daß Japan das Land mit dem höchsten durchschnittlichen Kochsalzverbrauch der Welt ist.

Als Kochsalzersatz werden in der Regel Kaliumsalze verwendet. Hinzu kommt, daß u. U. bei einer Dauerbehandlung des Bluthochdruckes mit Diuretika und/oder Beta-Blockern auch eine Kaliumsubstitution erforderlich ist. Es sind eine Reihe an Kochsalzersatzpräparaten, die auf Kaliumverbindungen basieren, bekannt. Nachteilig an ihnen ist, daß sie einen unangenehmen, bitteren, metallischen und teilweise sauren Geschmack aufweisen. Auch sind sie in ihren anwendungstechnischen Eigenschaften in vielen Fällen unbefriedigend, beispielsweise keine klare Wasserlöslichkeit, eine mangelnde Rieselfähigkeit wegen inhomogener Teilchenstruktur und Hygroskopizität, zu hoher Staubanteil oder. Entmischungserscheinungen.

In der DE-A-25 27 003 wird die geschmackliche Verbesserung von Kaliumsalzen mit Hilfe von Süßstoffen beschrieben. Diese entspricht nicht den Erwartungen, die an einen Salzersatz gestellt werden. In der Praxis zeigt sich, daß der spezifische Kaliumionen-Geschmack durch einen Zusatz von Süßstoffen eher noch unangenehmer wird und dementsprechend konnte die beabsichtigte Geschmacksveränderung in Richtung Kochsalz von einem Verkostungskollektiv nicht bestätigt werden.

In der US-A-3 505 082 wird beispielsweise die Geschmackskorrektur von Kaliumchlorid mit Fumarsäure beschrieben. Der Effekt ist jedoch nur sehr gering zu bewerten. Auch der in der DE-B-26 57 913 beschriebene partielle Ersatz von Kochsalz durch Glyzinamidhydrochlorid erscheint nicht unproblematisch, da diese Verbindung u. U. als gesundheitsgefährdend zu betrachten ist und nach dem Deutschen Lebensmittel- und Bedarfsgegenstände-Gesetz nicht zugelassen ist.

Die kommerziell erhältlichen Kochsalzersatzpräparate weisen insbesondere den besonders unangenehmen, bitteren, metallischen Geschmack des Kaliumchlorids auf. Die Kompensationsversuche mit organischen Säuren und mit Kaliumglutamat sind bei den meisten Produkten übertrieben, so daß der Geschmack zwar anders, aber nicht signifikant besser und nicht in die Richtung Kochsalz verschoben wird. Beim Salzen von Speisen verschiedener Geschmacksrichtungen, die üblicherweise mit Kochsalz angereichert werden, fällt die Dominanz eines spezifischen Eigengeschmacks in einem Salz naturgemäß dann besonders unangenehm auf, wenn dieser Eigengeschmack mit dem anzureichernden Speisengeschmack nicht harmoniert. So ist ein glutamatbetontes Salz zwar angenehm für eine Fleischbrühe, jedoch störend bei Gurkensalat, und eine Sellerienote kann den Geschmack von Gurkensalat fördern, sie wird jedoch bei Kartoffelbrei als äußerst störend empfunden. Nach diesem Bewertungsschema konnte bei einer vergleichenden Untersuchung von sieben Handelsprodukten gemäß Medical Tribune 27, 24 (1978) kein Produkt auch nur annähernd die Geschmacksqualität von Kochsalz erreichen. Auch beim Einbeziehen weiterer 11 handelsüblicher Diätsalze in analog gestaltete Geschmacksvergleiche konnte kein Produkt ermittelt werden, das einen befriedigenden Geschmack aufweist.

Aufgabe der Erfindung ist es, ein streng natriumarmes Diätsalz zur Verfügung zu stellen, bei dem die geschmacklichen Nachteile vermieden werden und das auch in seinen anwendungstechnischen Eigenschaften alle Erfordernisse erfüllt.

Gegenstand der Erfindung ist eine streng natriumarme Diätsalzmischung mit einem Natriumgehalt von weniger als 40 mg/100 g auf der Basis von Kaliumchlorid und geschmackverstärkender Zusätze, dadurch gekennzeichnet, daß die Mischung aus

60 bis 85 Gew.% Kaliumchlorid
10 bis 30 Gew.% Dikaliumadipat
2 bis 5 Gew.% Dikaliumtartrat
0,5 bis 2 Gew.% Monokaliumglutamat
0,5 bis 2 Gew.% Adipinsäure

und Kaliuminosinat und/oder Kaliumguanylat in einer Gesamtmenge von 0,004 bis 0,06 Gew.%, wobei die Gewichtsprozente jeweils auf das Gesamtgewicht (100 %) der Mischung bezogen sind, besteht.

Überraschenderweise weist die erfindungsgemäße Kombination einen Geschmack auf, der dem von Kochsalz weitgehend entspricht und hervorragend geeignet ist, den Geschmack von Speisen zu verbessern, ohne daß mit Kochsalz gewürzt wird.

Das erfindungsgemäße Diätsalz ist universell anwendbar, sowohl in Speisen, in denen die Salzmischung gelöst wird, als auch auf Speisen, bei denen das Salz in ungelöster Form auf die Oberfläche gestreut wird, z. B. gekochten Eiern.

Zur Erläuterung sei erwähnt, daß unter dem Begriff « streng natriumarm » verstanden wird, daß der Natriumgehalt weniger als 40 mg/100 g beträgt, wie es der Definition im Deutschen Lebensmittel- und Bedarfsgegenstände-Gesetz entspricht. Die verwendeten Salze werden in lebensmittelrechtlich zulässiger Qualität, wie sie im Handel erhältlich sind, verwendet.

Als Kaliumchlorid wird im Hinblick auf die Herstellung der Mischung und der Fließeigenschaften des einzusetzenden Kaliumchlorids bevorzugt ein Kaliumchlorid, das 0,2 bis 1,0 Gew.%, insbesondere 0,5 bis 0,8 Gew.% hochdisperses Siliziumdioxid enthält, verwendet. Der Zusatz von Adipinsäure bringt eine geschmacklich vorteilhafte, leicht saure Komponente. Die verhältnismäßig geringen Zusätze von Kaliuminosinat und/oder Kaliumguanylat beeinflussen interessanterweise den Geschmack günstig, so daß überraschenderweise nicht ohne weiteres erkannt werden kann, daß es sich um ein natriumarmes Diätsalz handelt.

Ein verbleibender, für Kaliumionen typischer, leicht metallischer Nachgeschmack wird in einer verbesserten und besonders bevorzugten Ausführungsform kompensiert durch Zusatz eines den Kaliumionen-Nachgeschmack kompensierenden Aromatisierungsmittels in einer Menge von 0,005 bis 0,1 Gew.%, bezogen auf das Gesamttrockengewicht.

Aromatisierungsmittel, die sich als besonders geeignet erweisen zur Beseitigung des bekannten Kaliumionen-Nachgeschmacks, werden vom Fachmann der Geschmacksrichtung Barbecue zugeordnet.

Solche Aromenkombinationen, in der Regel in Form flüssiger, rotbrauner Soßen verschiedener Zusammensetzung, sind besonders Gemische aus Weinessig, Senf, Tomatenmark, Zucker, Pflanzenöl, Salz, Worcestershire-Soße, verschiedener Gewürze u.a. oder einer Zusammensetzung aus Tomentenpürree vermischt mit Fleischsaft, Tomatenketchup, Meerrettich, Knoblauch- und Zwiebelsaft, gewürzt mit Senfpulver, Salz, Chillipulver, Cayennepfeffer, Zucker, Estragonessig, $A_1$-Soße und Worcestershire-Soße, wie es beispielsweise in dem Warenkunde-Lexikon von Dr. Oetker, 10. Auflage, oder im Lexikon der Küche, 17. Auflage, beschrieben wird.

Derartige Aromenkombinationen enthalten Aromastoffe, die den chemischen Klassen der Aldehyde, Ketone, Mercaptane und ungesättigten Alkohole angehören und beispielsweise gewonnen werden aus Gewürz- und Gemüseextrakten, wie Gewürznelken, Capsicum, Muskatnuß, Piment und Pfeffer sowie Sellerie, Petersilie, Karotten und Zwiebeln und verstärkt werden können mit synthetischen Aromastoffen, wie Methylheptenon, Dimethylsulfid, Methional, 2-Hexenol-1 und 3-Hexenol-1. Eine geeignete Aromenkombination ist beispielsweise im Handel erhältlich als « Barbecue » der Firma Firmenich GmbH.

Interessanterweise kennt der Handel keine derartig aromatisierten Diätsalze, und Geschmacksverbesserungen von Diätsalzen durch Aromatisierung werden auch nicht beschrieben. Die verwendete Menge von 0,005 bis 0,1 Gew.% führt weder zu einem störenden Eigengeruch noch Eigengeschmack des erfindungsgemäßen Diätsalzes.

Für die praktische Anwendung eines Diätsalzes werden als Mindesterfordernisse eine rein weiße Farbe, eine Korngrößenverteilung entsprechend der von Kochsalz, klare Wasserlöslichkeit, Kochfestigkeit, Rieselfähigkeit, Staubfreiheit und nichthygroskopisches Verhalten sowie keine Entmischungstendenzen und ein praktisch neutraler pH-Wert der wäßrigen Lösung zwischen 6 und 8 verlangt.

Ein Produkt mit diesen anwendungstechnischen Eigenschaften kann nicht ohne weiteres durch einfaches Vermischen der Bestandteile gemäß der erfindungsgemäßen Zusammensetzung erhalten werden. Es wäre dann nicht klar wasserlöslich, wegen des Fließmittels hochdisperses Siliziumdioxid, das im Kaliumchlorid enthalten ist, nicht rieselfähig wegen der inhomogenen Teilchenstrukturen und wegen der Hygroskopizität der Kaliumsalze. Es staubt wegen dem Feinanteil der Komponenten und zeigt wegen der ungleichmäßigen Teilchenstrukturen der verschiedenen Komponenten Entmischungserscheinungen.

Überraschenderweise wurde nun gefunden, daß durch ein spezielles Granulierverfahren, eine Wirbelschichtsprühgranulierung, eine Diätsalzmischung erhalten wird, das die oben genannten Anforderungen erfüllt.

Ein weiterer Gegenstand der Erfindung ist daher ein Verfahren zur Herstellung eines streng natriumarmen Diätzsalzes der erfindungsgemäßen Zusammensetzung, bei dem man in einer Wirbelschichtapparatur 90 bis 100, vorzugsweise 95 bis 100 Gew.% des zu verwendenden Kaliumchlorids, die Gesamtmenge pikaliumadipat und 50 bis 100, vorzugsweise 70 bis 90 Gew.% der zu verwendenden Adipinsäure als Trockenmasse vorlegt, die Trockenmasse durch Zuluft auf Temperaturen von 60 bis 90 °C, vorzugsweise 70 bis 80 °C, erwärmt, und die restliche Salzmenge, gelöst in Wasser von einer Menge von 10 bis 70 Gew.% der vorgelegten Trockenmasse, aufsprüht und anschließend trocknet.

Die Herstellung erfolgt in einer üblichen Wirbelschichtapparatur, wie sie beispielsweise von den Firmen Glatt und Aeromatik angeboten werden. Das erfindungsgemäße Verfahren kann z.B. im kleineren Maßstab in einem Glatt WSG 5 als auch in größerem Maßstab in einem Aeromatik Größe VI durchgeführt werden.

Während der Vorwärmphase der vorgelegten Salzmischung in der Wirbelschichtapparatur wird das Siliziumdioxid, das als übliches Fließmittel dem Kaliumchlorid zugesetzt sein kann, ausgeblasen. In der Regel ist ein Zeitraum von 5 bis 15 Minuten zur Entfernung des Siliziumdioxids ausreichend. Daß alles entfernt ist, kann beispielsweise daran erkannt werden, daß keine Staubentwicklung mehr zu beobachten ist. Auf diese Weise wird eine klare Wasserlöslichkeit des Produktes erreicht. Durch eine Sprühgranulierung wird die restliche Salzmenge als wäßrige Lösung auf die Vorlage bei einer Zulufttemperatur von 60 bis 90 °C aufgesprüht. Die anschließende Trocknung wird zweckmäßigerweise bei Temperaturen von 70 bis 90 °C durchgeführt. Man erhält ein staubfreies und rieselfähiges Granulat, das in der Korngröße dem üblichen Kochsalz entspricht.

Das gegebenenfalls zu verwendende Aromatisierungsmittel wird der Sprühlösung, die die restliche Salzmenge in Wasser gelöst enthält, zugesetzt.

Der für einen Fachmann erstaunliche Effekt, daß dieses Produkt ohne Hilfsmittelzusätze rieselfähig bleibt, ist durch diese spezielle Verfahrenstechnik zu erklären, durch die es gelingt, ein staubfreies Granulat mit homogener Struktur herzustellen, bei dem die einzelnen Granulatkörner nicht mehr hygroskopisch sind, wahrscheinlich weil die Wasseraufnahmekinetik erheblich gehindert ist.

Die Erfindung wird durch folgende Beispiele näher erläutert, die aus der Tabelle 1 hervorgehen.

In der Tabelle 1 bedeuten :

x Gew.% des gesamten Kaliumchlorid, die Gesamtmenge des Dikaliumadipat sowie y Gew.% der gesamten Adipinsäure werden in einer Wirbelschichtsprühgranulieranlage den Zeitraum a Minuten bei der Zulufttemperatur von b erwärmt.

Die übrigen Bestandteile werden in z % des Gesamtgewichtes der Trockenmasse an Wasser gelöst und bei der Zulufttemperatur b so auf die vorgelegten Salze aufgesprüht, daß die Ablufttemperatur bei c verweilt.

Nach Beenden des Sprühvorganges wird bei der Zulufttemperatur d solange nachgetrocknet bis die Ablufttemperatur den Wert e erreicht hat.

Es entsteht ein weißes, feines staubfreies, homogenes und leicht rieselfähiges Granulat, das nicht hydroskopisch und klar wasserlöslich ist und kleine Entmischungstendenzen zeigt.

Das Produkt weist in einer 2 %igen wäßrigen Lösung einen pH-Wert von f auf.

## Tabelle 1

| Zus. | E | Beispiel 1 | Beispiel 2 | Beispiel 3 | Beispiel 4 | Beispiel 5 |
|------|---|-----------|-----------|-----------|-----------|-----------|
| K Cl* | % | 60,99 | 84,95 | 75,2 | 80,44 | 69,96 |
| K adip | % | 30,0 | 11,0 | 20,0 | 15,0 | 26,0 |
| K tart | % | 5,0 | 2,0 | 3,0 | 3,0 | 2,25 |
| K glut | % | 2,0 | 0,5 | 1,5 | 0,5 | 1,0 |
| K guan | % | 0,01 | — | 0,005 | 0,05 | 0,01 |
| K inos | % | — | 0,05 | 0,005 | 0,005 | 0,01 |
| Adip. sre | % | 2,0 | 1,5 | 0,2 | 1,0 | 0,75 |
| Aroma** | % | — | — | 0,09 | 0,005 | 0,02 |
| x Anteil | % | 100 | 100 | 90 | 100 | 100 |
| y Anteil | % | 90 | 100 | 50 | 85 | 75 |
| a Zeit | min | 5 | 10 | 10 | 15 | 10 |
| b Temp | °C | 90 | 70 | 80 | 60 | 80 |
| z Anteil | % | 30 | 70 | 70 | 40 | 20 |
| c Temp | °C | 45 | 40 | 40 | 30 | 40 |
| d Temp | °C | 80 | 70 | 80 | 80 | 80 |
| e Temp | °C | 70 | 60 | 65 | 65 | 70 |
| f pH | — | 6,6 | 7,0 | 7,9 | 7,5 | 7,6 |

\* Mit 0,5 % hochdispersem Siliziumdioxid.

\*\* Aroma « Barbecue » der Fa. Firmenich GmbH.

## Zu Beispiel 1

Bei einem bewertenden Prüfverfahren wurden das Salz und seine wäßrigen Lösungen in 1,5 bis 2 und 3 %igen Konzentrationen im Vergleich zu Kochsalz und dessen entsprechenden Lösungen von einem Probandenkollektiv von 8 Personen, davon 5 männlich, darunter ein Berufskoch, verkostet. Die Unterschiede in den Bewertungen waren gering. Das erfindungsgemäße Salz wurde allgemein als angenehm im Geschmack empfunden.

## Zu Beispiel 2

Dieses Salz wurde bei einem Probeessen bei Speisen unterschiedlicher Geschmacksrichtungen, die üblicherweise mit Kochsalz angereichert werden, eingesetzt und von einem Probandenkollektiv von 7 Personen, davon 5 männlich, darunter ein Berufskoch, geschmacklich gegen die jeweils entsprechende Kochsalzwürzung und gegen die ungewürzten Speisen verglichen.

Sowohl bei den Speisen, in denen der Kochsalzzusatz gelöst und gekocht vorliegt, wie bei Rindfleisch und Hühnerbrühe, sowie gelöst und ungekocht, wie bei Kartoffelpürree, als auch bei Speisen, in denen Salz ganz oder teilweise ungelöst vorliegt, wie bei Gurkensalat, Speisequark und Eiern, wurden von allen Prüfern die geschmacklichen Verbesserungen, die durch das erfindungsgemäße Salz im Vergleich zu den ungewürzten Gerichten erreicht werden konnten, als signifikant oder hervorragend bezeichnet.

Die Unterschiede zu den mit Kochsalz gewürzten Speisen wurden als nicht bedeutend charakterisiert.

## Zu Beispiel 3

Dieses Produkt wurde von einem Probandenkollektiv von 16 Personen, davon 12 männlich, darunter 2 Berufsköche, in fester Form, sowie in Lösungen mit 1, 1,5, 2 und 3 %igen Konzentrationen jeweils gegen Kochsalz und 3 handelsübliche Diätsalze A, B und C und deren entsprechende Lösungen verkostet.

Produkt A, dessen Lösungen wegen der partiellen Unlöslichkeit filtriert werden mußten, wurde als bitter, dumpf, ungenießbar, stark metallisch und sogar als leicht adstringierend charakterisiert.

Produkt B, dessen Lösungen stark opaleszierten und nicht filtrierbar waren, fiel durch einen stark glutamatartigen, dumpfsauren Geschmack mit ausgeprägt metallischem Nachgeschmack auf, während Produkt C, das zwar löslich aber wegen seiner Hygroskopizität kaum fließfähig war, als eigenartig würzig, als unangenehm sellerieartig und als Sellerie mit Metallkomponente bewertet wurde.

Das erfindungsgemäße Produkt war in der Bewertung allen Handelsprodukten klar und eindeutig überlegen, es wurde von allen Probanden als angenehm salzig oder kochsalzähnlich empfunden und von einem Prüfer wurde es sogar mit Kochsalz verwechselt.

## Zu Beispiel 4

Dieses Produkt wurde analog Beispiel 2 gegen ungewürzte, gegen mit Kochsalz gewürzte und gegen mit Handelsprodukt B gewürzte exemplarische Basisspeisen verglichen. Das Probandenkollektiv setzte sich aus 11 Personen, davon 8 männlich, darunter 1 Berufskoch, zusammen.

Alle Speisen, die mit dem Produkt B gewürzt waren, wurden ausnahmslos von allen Probanden abgelehnt, da sich der metallische Geschmack auf die Gerichte übertrug. Lediglich in der Fleisch- und Hühnerbrühe wurde es bei geringen Dosierungen als tragbar akzeptiert, doch war dann der Gesamtwürzeffekt so gering, daß die Gerichte als fade empfunden wurden.

Das erfindungsgemäße Produkt wurde in seinen Würzeigenschaften als ausgezeichnet und dem Kochsalz gleichwertig eingestuft.

## Zu Beispiel 5

Das erfindungsgemäße Produkt wurde bei einem Mittagessen in einer Werkskantine als ausschließliches Speisesalz eingesetzt. Die alternativ wählbaren Menüs setzten sich wie folgt zusammen :

1. Essen : Fleischbrühe mit Teigwareneinlage
   Gulasch mit Teigwaren
   Grüner Salat
2. Essen : Fleischbrühe mit Teigwareneinlage
   Gebratenes Fleisch mit Salzkartoffeln und Gemüseallerlei
   Gemischter Salat, aus grünem Salat, Gurken und Tomaten

Bei 340 Essensteilnehmern gab es keine Beschwerde, die Speisenreste-Rücklaufmengen waren nicht größer als üblich und die Anfragehäufigkeit nach Nachschlägen lag in normaler Größenordnung.

Einzeln befragte Teilnehmer waren völlig überrascht, daß das Essen nicht mit Kochsalz, sondern mit einem Diätsalz gewürzt war.

## Ansprüche

1. Streng natriumarme Diätsalzmischung mit einem Natriumgehalt von weniger als 40 mg/100 g auf der Basis von Kaliumchlorid und geschmackverstärkender Zusätze, dadurch gekennzeichnet, daß die Mischung aus

60 bis 85 Gew.% Kaliumchlorid
10 bis 30 Gew.% Dikaliumadipat
2 bis 5 Gew.% Dikaliumtartrat
0,5 bis 2 Gew.% Monokaliumglutamat
0,5 bis 2 Gew.% Adipinsäure

und Kaliuminosinat und/oder Kaliumguanylat in einer Gesamtmenge von 0,004 bis 0,06 Gew.%, wobei die Gewichtsprozente jeweils auf das Gesamtgewicht (100 %) der Mischung bezogen sind, besteht.

2. Streng natriumarmes Diätsalz nach Anspruch 1, das zusätzlich ein den Kaliumionen-Nachgeschmack kompensierendes Aromatisierungsmittel der Geschmacksrichtung Barbecue in einer Menge von 0,005 bis 0,1 Gew.%, bezogen auf das Gesamtgewicht, enthält.

3. Verfahren zur Herstellung eines streng natriumarmen Diätsalzes nach Anspruch 1 oder 2, dadurch gekennzeichnet, daß man in einer Wirbelschichtapparatur 90 bis 100 Gew.% des zu verwendenden Kaliumchlorids, die Gesamtmenge Dikaliumadipat und 50 bis 100 Gew.% der zu verwendenden Adipinsäure als Trockenmasse vorlegt, die Trockenmasse durch Zuluft auf Temperaturen von 60 bis 90 °C erwärmt, die restliche Salzmenge, gelöst in Wasser von einer Menge von 10 bis 70 Gew.% der vorgelegten Trockenmasse, aufsprüht und anschließend trocknet.

4. Verfahren zur Herstellung eines streng natriumarmen Diätsalzes nach Anspruch 3, dadurch gekennzeichnet, daß man der Sprühlösung ein den Kaliumionen-Nachgeschmack kompensierendes Aromatisierungsmittel der Geschmacksrichtung Barbecue in einer Menge von 0,005 bis 0,1 Gew.%, bezogen auf das Gesamttrockengewicht, zusetzt.

## Claims

1. A stringently sodium-restricted dietetic salt mixture having a sodium content of less than 40 mg/100 g and based on potassium chloride and taste-intensifying additives, which mixture consists of

from 60 to 85 % by weight of potassium chloride,
from 10 to 30 % by weight of dipotassium adipate,
from 2 to 5 % by weight of dipotassium tartrate,
from 0.5 to 2 % by weight of monopotassium glutamate,
from 0.5 to 2 % by weight of adipic acid

and a total amount of from 0.004 to 0.06 % by weight of potassium inosinate and/or potassium guanylate, the percentages by weight being in each case based on the total weight (100 %) of the mixture.

2. A stringently sodium-restricted dietetic salt as claimed in claim 1, which additionally contains a flavoring agent of the barbecue-type taste, which compensates the potassion ion aftertaste, in an amount of from 0.005 to 0.1 % by weight, based on the total weight.

3. A process for the preparation of a stringently sodiumrestricted dietectic salt as claimed in claim 1 or 2, wherein 90 to 100 % by weight of the potassium chloride to be used, the total amount of the dipotassium adipate and from 50 to 100 % by weight of the adipic acid to be used are introduced, as dry material, into a fluidized bed apparatus, the dry material is heated to 60 to 90 °C, by the air introduced, and the remainder of the salt, dissolved in an amount of water equal to from 10 to 70 % by weight of the dry material initially introduced, is sprayed onto the dry material, after which the product is dried.

4. A process for the preparation of a stringently sodiumrestricted dietectic salt as claimed in claim 3, wherein a flavoring agent which compensates the potassium ion aftertaste is added to the spraying solution in an amount of from 0.005 to 0.1 % by weight, based on the total dry weight.

## Revendications

1. Mélange de sel de régime très pauvre en sodium, d'une teneur en sodium inférieure à 40 mg/100 g, à base de chlorure de potassium et d'additifs renforçateurs du goût, caractérisé par le fait que le mélange est constitué de :

60 à 85 % en poids de chlorure de potassium
10 à 30 % en poids d'adipate de potassium
2 à 5 % en poids de tartrate de potassium
0,5 à 2 % en poids de glutamate de potassium
0,5 à 2 % en poids d'acide adipique

et de l'inosinate de potassium et/ou du guanylate de potassium en quantité totale de 0,004 à 0,06 % en poids, les pourcentages en poids étant tous rapportés au poids total (100 %) du mélange.

2. Mélange de sel de régime très pauvre en sodium selon la revendication 1, qui contient, en outre, un agent d'aromatisation compensant l'arrière-goût des ions potassium et rappelant le goût du barbecue, en proportion de 0,005 à 0,1 % en poids rapportés au poids total.

3. Procédé de préparation d'un sel de régime très pauvre en sodium, selon la revendication 1 ou 2, caractérisé par le fait qu'on introduit, sous forme de masse sèche, dans un appareil à couche en mouvement turbulent, 90 à 100 % en poids du chlorure de potassium à utiliser, la totalité de l'adipate de potassium et 50 à 100 % en poids de l'acide adipique à utiliser, on chauffe la masse sèche par amenée d'air à des températures de 60 à 90 °C, on pulvérise la quantité de sel restante, dissoute dans l'eau, en proportion de 10 à 70 % en poids de la masse sèche introduite, et enfin on la sèche.

4. Procédé de préparation d'un sel de régime très pauvre en sodium selon la revendication 3, caractérisé par le fait qu'on ajoute à la solution de pulvérisation un agent d'aromatisation compensant l'arrière-goût des ions potassium et rappelant le goût du barbecue, en proportions de 0,005 à 0,1 % en poids rapportés au poids sec total.